(19) Europäisches Patentamt
European Patent Office
Office européen des brevets

(11) EP 0 595 123 B1

(12) EUROPÄISCHE PATENTSCHRIFT

(45) Veröffentlichungstag und Bekanntmachung des Hinweises auf die Patenterteilung:
**26.03.2003 Patentblatt 2003/13**

(51) Int Cl.[7]: **C08K 3/26**, C08L 67/02

(21) Anmeldenummer: **93116616.9**

(22) Anmeldetag: **14.10.1993**

(54) **Flammgeschützte, mineralgefüllte thermoplastische Formmassen mit hoher Kriechstromfestigkeit**

Flame-resistant, mineral-filled thermoplastic moulding compositions with high track resistance

Masses de moulage thermoplastiques, à charge minérale et ignifugées, ayant une haute résistance aux courants de fuite

(84) Benannte Vertragsstaaten:
**BE DE ES FR GB IT NL**

(30) Priorität: **27.10.1992 DE 4236122**

(43) Veröffentlichungstag der Anmeldung:
**04.05.1994 Patentblatt 1994/18**

(73) Patentinhaber: **BAYER AG**
**51368 Leverkusen (DE)**

(72) Erfinder:
- **Magerstedt, Herbert, Dipl.-Ing.**
  **D-47445 Moers (DE)**
- **Zander, Klaus, Dr.**
  **D-45478 Mülheim (DE)**
- **Freitag, Dieter, Dr.**
  **D-47802 Krefeld (DE)**
- **Idel, Karsten-Josef, Dr.**
  **D-47802 Krefeld (DE)**
- **Sayed, Aziz El, Dr.**
  **D-51375 Leverkusen (DE)**

(56) Entgegenhaltungen:
**EP-A- 0 543 262**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 595 123 B1

**Beschreibung**

Die Erfindung betrifft die Verwendung von Calcium-Magnesium-Carbonat-Hydrat in thermoplastischen Formmassen auf der Basis von Polyalkylenterephthalat und gegebenenfalls aromatischem Polycarbonat und gegebenenfalls Kautschuk-elastischem Polymerisat und gegebenenfalls Glasfasern, sowie aus diesen thermoplastischen Formmassen hergestellte Formkörper zur Erzielung einer hohen Kriechstromfestigkeit bei einem gleichzeitig guten flammwidrigen Verhalten ohne Schädigung der thermoplastischen Matrix.

Wie beispielsweise aus der Literatur Kunststoffe 80 (1990), Seite 3 und 4, bekannt ist, lassen sich Kunststoffe, wie Duroplaste, Elastomere, Polyamid, Polycarbonat, etc. durch den Einsatz von Mineralien mit einem hohen Kristallwassergehalt, wie z.B. mit Magnesiumhydroxid, flammhemmend einstellen.

Aus den oben aufgeführten Literaturstellen ist zu entnehmen, daß Kunststoffteile, die einen mineralischen Füllstoff enthalten, zwar eine gute flammhemmende Wirkung aufweisen, aber aufgrund des für die flammhemmende Wirkung benötigten hohen Anteils (>45 Gew.-%) deutlich verminderte Eigenschaften resultieren.

Weiterhin werden in EP-A 543 262, ein nichtvorveröffentlichtes Dokument, Formmassen aus 30 bis 80 Gew.-% thermoplastischem Polyester und 20 bis 70 Gew.-% Mischungen aus Metallcarbonaten von Metallen der 2. Hauptgruppe des Periodensystems beschrieben. Bei den Mischungen aus Metallcarbonaten handelt es sich vorzugsweise um eine Mischung aus Magnesium-Calcium-Carbonat und Magnesium-Carbonat.

Im Gegensatz dazu ist der Gegenstand der vorliegenden Anmeldung gegebenenfalls verstärkte Polyalkylenterephthalat-Formmassen, die wasserhaltiges Magnesium-Calcium-Carbonat in "reiner" Form, nicht als Mischung enthalten, sowie die Verwendung von Magnesium-Calcium-Carbonat-Hydrat in gegebenenfalls verstärkten Polyalkylenterephthalat-Formmassen zur Verbesserung der Kriechstromfestigkeit in den daraus hergestellten Formkörpern und ein Verfahren zur Herstellung solcher Formmassen.

EP-A 57 161 beschreibt Formmassen aus thermoplastischen Formmassen, die Dolomit enthalten. Durch den Zusatz von Dolomit wird die Kriechstromfestigkeit verbessert.

Formkörper, die aus Calcium-Magnesium-Carbonat-Hydrat enthaltenden Polyalkylenterephthalat-Formmassen hergestellt sind, zeigen auch ohne den Zusatz von Flammschutzmitteln, ein gutes brandwidriges Verhalten, eine hohe Kriechstromfestigkeit und gute Zähigkeit. Durch den Zusatz von Flammschutzmitteln wird die Zähigkeit zusätzlich noch verbessert.

Obwohl aufgrund der basischen Bestandteile zu erwarten gewesen wäre, daß die rheologischen Eigenschaften starke Einbußen erleiden, ist dieses Verhalten nicht zu beobachten. Die Lösungsviskosität zeigt mit diesen basischen Bestandteilen ein gleiches Niveau im Vergleich zu Produkten, die diese Bestandteile nicht enthalten.

Es wurde gefunden, daß mit einem Polyalkylenterephthalat, welches mit einem Calcium-Magnesium-Carbonat-Hydrat ausgestattet ist, eine hohe Kriechstromfestigkeit bei einem gleichzeitig guten flammwidrigen Verhalten und guten übrigen Eigenschaften ohne Schädigung der thermoplastischen Matrix erzielt wird.

Der Vorteil für flammgeschützte Systeme liegt darin, daß neben der flammschützenden Wirkung eine hohe Kriechstromfestigkeit bei einer gleichzeitig guten Einbindung in das thermoplastische Gefüge ohne Schädigung derselben zu beobachten ist und ein solches preiswertes System von hohem wirtschaftlichen Interesse ist.

Die Aufgabe der vorliegenden Erfindung ist, eine thermoplastische Formmasse auf Basis Polyalkylenterephthalat mit einem handelsüblichen, preiswerten und damit wirtschaftlichen Füllstoff bereitzustellen, wobei die daraus erhältlichen Formkörper oder Formteile sich durch eine gute flammschützende Wirkung bei einer gleichzeitig hohen Kriechstromfestigkeit ohne Schädigung der Matrix auszeichnen.

Gegenstand der vorliegenden Erfindung sind thermoplastische Formmassen aus

A) 20 bis 60 Gew.-Teilen Calcium-Magnesium-Carbonat-Hydrat,

B) 30 bis 80 Gew.-Teilen Polyalkylenterephthalat und

C) 0 bis 30 Gew.-Teilen Glasfasern,

wobei die Summe aus A+B+C 100 ergibt und wobei gegebenenfalls jeweils 1 bis 20 Gew.-Teile Polyalkylenterephthalat durch aromatisches Polycarbonat und/oder kautschukelastisches Polymerisat mit einer Glasübergangstemperatur von <-10 C ersetzt werden kann und wobei die Formmasse 1 bis 10 Gew.-Teile halogenierte Verbindungen und 0,5 bis 5 Gew.-Teile (jeweils bezogen auf 100 Gew.-Teile A+B+C) Antimontrioxid oder Antimonpentoxid enthalten kann.

Die erfindungsgemäßen Formmassen haben vorzugsweise eine Niederspannungskriechwegbildung (Kriechstromfestigkeit) >400, insbesondere >500 [Stufe].

Gegenstand der vorliegenden Erfindung ist weiterhin die Verwendung von

A) 20 bis 60 Gew.-Teilen Calcium-Magnesium-Carbonat-Hydrat, in

B) 30 bis 80 Gew.-Teilen Polyalkylenterephthalat, und

C) 0 bis 30 Gew.-Teilen Glasfasern,

wobei die Summe aus A+B+C 100 ergibt und wobei gegebenenfalls jeweils 1 bis 20 Gew.-Teile Polyalkylenterephthalat durch aromatisches Polycarbonat und/oder kautschukelastisches Polymerisat mit einer Glasübergangstemperatur von <-10 C ersetzt werden kann und wobei die Formmasse 1 bis 10 Gew.-Teile halogenierte Verbindungen und 0,5 bis 5 Gew.-Teile (jeweils bezogen auf 100 Gew.Teile A+B+C) Antimontrioxid oder Antimonpentoxid enthalten kann zur Herstellung von kriechstromfesten Formkörpern, vorzugsweise von Formkörpern, die eine Niederspannungskriechwegbildung >400, insbeondere >500 [Stufe] haben. Darüber hinaus zeigen die Formkörper guten Flammschutz.

Ein Teil der Polyalkylenterephthalat-Komponente kann durch aromatisches Polycarbonat und gegebenenfalls kautschukelastische Polymerisate mit einer Glasübergangstemperatur von <-10 C ersetzt werden. Auch die erfindungsgemäße Zugabe von wiederaufgearbeiteten Bestandteilen der thermoplastischen Formmassen ist möglich, ohne daß die beschriebenen Eigenschaften nachteilig beeinflußt werden.

**Komponente A:**

Als Calcium-Magnesium-Carbonat-Hydrat gemäß dieser Erfindung wird handelsübliches natürliches Mineral mit oder ohne Oberflächenbehandlung verwendet. Zur Oberflächenbehandlung werden in der Regel Aminosilane verwendet. Feinteiliges (0,4-10 microns) Mg-Ca-Carbonat-Hydrat, wie beispielsweise Securoc® (Incemin AG) können verwendet werden (MgO = ca. 40 %, CaO = ca. 5,5 %, Glühverlust bei 1 100 C = ca. 54 %), vergl. Beispiele.

**Komponente B:**

Polyalkylenenterephthalate im Sinne der Erfindung sind Reaktionsprodukte aus aromatischen Dicarbonsäuren oder ihren reaktionsfähigen Derivaten (z.B. Dimethylestern oder Anhydriden) und aliphatischen, cycloaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Karl-Hanser-Verlag, München 1973).

Bevorzugte Polyalkylenterephthalate enthalten mindestens 80, vorzugsweise 90 Mol.-% bezogen auf die Dicarbonsäurekomponente, Terephtalsäurereste und mindestens 80, vorzugsweise mindestens 90 Mol.-%, bezogen auf die Diolkomponente, Ethylenglykol- und/oder Butandiol-1,4-reste. Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyalkylenterephthalate können neben Ethylenglykol- bzw. Butandiol-1,4-Resten bis zu 20 Mol.-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentan-diol-1,5, Hexandiol-1.6, Cyclohexan-dimethanol-1,4, 3-Methylpentandiol-2,4, 2-Methylpentandiol-2,4, 2,2,4-Trimethylpentandiol-1,3 und -1,6,2-Ethylhexandiol-1,3 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-β-hydroxyethoxyphenyl)-propan und 2,2-bis-(4-hydroxypropoxyphenyl)-propan (DE-OS 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäure, wie sie z.B. in der DE-OS 19 00 270 und der US-PS 3 692 744 beschrieben sind, verzweigt werden. Beispiele für bevorzugte Verzweigungsmittel sind Trimesinsäure, Trimellitsäure, Trimethylolethan und -propan und Pentaerythrit.

Es ist ratsam, nicht mehr als 1 Mol.-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind (Polyethylen- und Polybutylentherephthalat), und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/butandiol-1,4)-terephthalate.

Die als Komponente B vorzugsweise verwendeten Polyalkylenterephthalate besitzen im allgemeinen eine Intrisic-Viskosität von ca. 0,4 bis 1,5 dl/g, vorzugsweise 0,5 bis 1,3 dl/g, jeweils gemessen in Phenol/o-Dichlorbenzol

(1:1 Gew.-Teile) bei 25°C.

Unter aromatischen Polycarbonaten im Sinne dieser Erfindung werden Homopolycarbonate und Mischungen dieser Polycarbonate verstanden, denen z.B. mindestens eines der folgenden Diphenole zugrunde liegt:

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
$\alpha,\alpha'$-Bis-(hydroxyphenyl)-diisopropylbenzole

sowie deren kernalkylierte und kernhalogenierte Derivate.

Diese und weitere geeignete Diphenole sind z.B. in den US-PS 3 028 365, 2 999 835, 3 148 172, 2 275 601, 2 991 283, 3 271 367, 3 062 781, 2 970 131 und 2 999 846, in den deutschen Offenlegungsschriften 1 570 703, 2 063 050, 2 063 052, 2 211 956, 22 11 957 der französischen Patentschrift 1 561 518 und in der Monographie "H. Schnell, Chemistry und Physics of Polycarbonates, Interscience Publishers, New York 1964", beschrieben.

Bevorzugte Diphenole sind beispielsweise:

2,2-Bis-(4-Hydroxyphenyl)-propan,
1,1-Bis-(4-hydroxyphenyl)-cyclohexan,
2,2-Bis-(3,5-dichlor-4-hydroxyphenyl)-propan
2,2-Bis-(3,5-dibrom-4-hydroxyphenyl)-propan,
2,2-Bis-(3,5-dimethyl-4-hydroxyphenyl)-propan,
Bis-(3,5-dimethyl-4-hydroxyphenyl)-methan,
Bis-(4-hydroxyphenyl)-sulfid,
1,1-Bis-(4-hydroxyphenyl)-3,3,5-trimethylcyclohexan.

Die Diphenole können sowohl einzeln als auch im Gemisch eingesetzt werden. Besonders bevorzugte aromatische Polycarbonate sind Polycarbonate auf der Basis von 2,2-Bis-(4-hydroxyphenyl)-propan bzw. einem der anderen als bevorzugt genannten Diphenole. Ganz besonders bevorzugt sind solche auf Basis von 2,2-Bis-(4-hydroxyphenyl)-propran, 2,2-Bis-(3,5-dimethyl-4-hydroxyphenyl)-propan oder 1,1-Bis-(4-hydroxyphenyl)-3,3,5-trimethylcyclohexan oder Gemische aus 2,2-Bis-(4-hydroxyphenyl)-propan und 1,1-Bis-(4-hydroxyphenyl)-3,3,5-trimethylcyclohexan.

Die aromatischen Polycarbonate können nach bekannten Verfahren hergestellt werden, z.B. durch Schmelzumesterung eines entsprechenden Bisphenols mit Diphenylcarbonat und in Lösung aus Bisphenolen und Phosgen. Die Lösung kann homogen sein (Pyridinverfahren) oder heterogen (Zweiphasengrenzflächenverfahren) (vgl. H. Schnell, "Chemistry and Physics of Polycarbonates", Polymer Reviews, Vol. IX, S 33ff, Intersciencs Publ. 1964).

Die aromatischen Polycarbonate besitzen in der Regel mittlere Molekulargewichte $\overline{M}_w$ von ca. 10.000 bis 200.000, vorzugsweise 20.000 bis 80.000 (ermittelt durch Gelchromatographie nach vorheriger Eichung).

Copolycarbonate im Sinne der Erfindung sind insbesondere Polydiorganosiloxan-Polycarbonat-Blockcopolymere mit mittlerem Molekulargewicht $\overline{M}_w$ von ca. 10.000 bis 200.000, vorzugsweise 20.000 bis 80.000 (ermittelt durch Gelchromatographie nach vorheriger Eichung) und mit einem Gehalt an aromatischen Carbonatstruktureinheiten von etwa 75 bis 97,5 Gew.-%, bevorzugt 85 bis 97 Gew.-% und einem Gehalt an Polydiorganosiloxanstruktureinheiten von etwa 25 bis 2,5 Gew.-%, bevorzugt 15 bis 3 Gew.-%, wobei die Blockcopolymeren ausgehend von $\alpha,\omega$-Bishydroxyaryloxyendgruppen-haltigen Polydiorganosiloxanen mit einem Polymerisationsgrad $P_n$ von 5 bis 100, bevorzugt 20 bis 80, hergestellt werden.

Die Polydiorganosiloxan-Polycarbonat-Blockpolymeren können auch eine Mischung aus Polydiorganosiloxan-Polycarbonat-Blockcopolymeren mit üblichen polysiloxanfreien, thermoplastischen Polycarbonaten sein, wobei der Gesamtgehalt an Polydiorganosiloxanstruktureinheiten in dieser Mischung ca. 2,5 bis 25 Gew.-% beträgt.

Solche Polydiorganosiloxan-Polycarbonat-Blockcopolymere sind dadurch gekennzeichnet, daß sie in der Polymerkette einerseits aromatische Carbonatstruktureinheiten (1) und andererseits Aryloxyendgruppen-haltige Polydiorganosiloxane (2) enthalten,

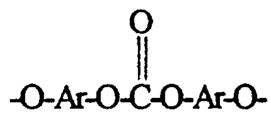 (1)

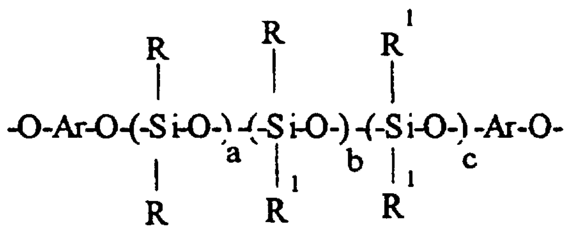 (2)

worin

Ar gleiche oder verschiedene Arylreste aus Diphenolen sind und

R und $R^1$ gleich oder verschieden sind und lineares Alkyl, verzweigtes Alkyl, Alkenyl, halogeniertes lineares Alkyl, halogeniertes verzweigtes Alkyl, Aryl oder halogeniertes Aryl, vorzugsweise aber Methyl bedeuten,

und
die Anzahl der Diorganosiloxy-Einheiten n=a+b+c= 5 bis 100, vorzugsweise 20 bis 80, ist.

Alkyl ist in vorstehender Formel (2) beispielsweise $C_1$-$C_{20}$-Alkyl, Alkenyl ist in vorstehender Formel (2) beispielsweise $C_2$-$C_6$-Alkenyl; Aryl ist in vorstehender Formel (2) $C_6$-$C_{14}$-Aryl. Halogeniert bedeutet in vorstehender Formel teilweise oder vollständig chloriert, bromiert oder fluoriert.

Beispiele für Alkyle, Alkenyle, Aryle, halogenierte Alkyle und halogenierte Aryle sind Methyl, Ethyl, Propyl, n-Butyl, tert.-Butyl, Vinyl, Phenyl, Naphthyl, Chlormethyl, Perfluorbutyl, Perfluoroctyl und Chlorphenyl.

Derartige Polydiorganosiloxan-Polycarbonat-Blockcopolymere sind z.B. aus US-PS 3 189 662, US-PS 3 821 325 und US-PS 3 832 419 bekannt.

Bevorzugte Polydiorganosiloxan-Polycarbonat-Blockcopolymere werden hergestellt, indem man α,ω-Bishydroxyaryloxyendgruppen-haltige Polydiorganosiloxane zusammen mit anderen Diphenolen, gegebenenfalls unter Mitverwendung von Verzweigern in den üblichen Mengen, z.B. nach dem Zweiphasengrenzflächenverfahren (s. dazu H. Schnell, Chemistry and Physics of Polycarbonates Polymer Rev. Vol. IX, Seite 27 ff, Interscience Publishers New York 1964) umsetzt, wobei jeweils das Verhältnis der bifunktionellen phenolischen Reaktanten so gewählt wird, daß daraus der erfindungsgemäße Gehalt an aromatischen Carbonatstruktureinheiten und Diorganosiloxy-Einheiten resultiert.

Derartige α,ω-Bishydroxyaryloxyendgruppen-haltige Polydiorganosiloxane sind z.B. aus US 3 419 634 bekannt.

Die kautschukelastischen Polymerisate umfassen Copolymerisate - insbesondere Pfropfcopolymerisate - mit kautschukelastischen Eigenschaften, die im wesentlichen aus mindestens 2 der folgenden Monomeren erhältlich sind:

Chloropren, Isopren, Isobuten, Styrol, Acrylnitril, Ethylen, Propylen, Vinylacetat und (Meth)Arcylsäureester mit 1 bis 18 C-Atomen in der Alkoholkomponente; also Polymerisate wie sie, z.B. in "Methoden der organischen Chemie" (Houben-Weyl), Bd. 14/1, Georg-Thieme-Verlag, Stuttgart 1961, s. 393-406 und in C.B. Bucknall, "Toughened Plastics", Appl. Science Publishers, London 1977, beschrieben sind. Die Polymerisate besitzen einen Gelgehalt von über 20, vorzugsweise über 40 Gew.-%. Die Glasübergangstemperatur (Tg) liegt unter -20°C.

Bevorzugte Polymerisate sind selektiv hydrierte Blockcopolymerisate eines vinylaromatischen Monomeren (X) und eines konjugierten Diens (Y) von X-Y-Typ. Diese Blockcopolymerisate können nach bekannten Verfahren hergestellt werden.

Im allgemeinen kann für die Herstellung der geeigneten X-Y-Blockcopolymerisate aus Styrol, α-Methylstyrol, Vinyltoluol usw. und aus konjugierten Dienen, wie Butadien, Isopren usw., die für die Herstellung von Styrol-Dien-Blockpolymerisaten verwendete Technologie benutzt werden, die in "Encyclopedia of Polymer Science and Technology", Bd. 15, Interscience, N.Y. (1971) auf den Seiten 508 ff beschrieben ist. Die selektive Hydrierung kann auf an sich bekannten Wegen durchgeführt werden und bedeutet, daß die ethylenischen Doppelbindungen im wesentlichen vollständig hydriert werden, wobei die aromatischen Doppelbindungen im wesentlichen unbeeinflußt bleiben.

Derartige selektiv hydrierte Blockcopolymerisate werden z.B. in der DE-OS 3 000 282 beschrieben.

Bevorzugte Polymerisate sind z.B. mit Stryrol und/oder Acrylnitril und/oder (Meth)Acrylsäurealkylestern gepfropfte Polybutadiene, Butadien/Styrol-Copolymerisate und Poly(meth)acrylsäureester, z.B. Copolymerisate aus Styrol oder Alkylstryrol und konjugierten Dienen (schlagfestes Polystyrol), d.h. Copolymerisate der in der DE-OS 1 694 173 (= US-PS 3 564 077) beschriebenen Art, mit Acryl- oder Methacrylsäureestern, Vinylacetat, Acrylnitril, Styrol und/oder Alkylstyrolen gepfropfte Polybutadiene, Butadien/- Styrol- oder Butadien/Acrylnitril-Copolymerisate, Polyisobutene oder Polyisoprene, wie sie z.B. in der DE-OS 2 348 377 (= US-PS 3 919 353) bzw. in der DE-A-3 105 364 und DE-A-3 019 233 beschrieben sind.

Besonders bevorzugte Polymerisate sind z.B. ABS-Polymerisate (sowohl Mischals auch Pfropftypen), wie sie z.B. in der DE-OS 2 035 390 (= US-PS 3 644 574) oder in der DE-OS 2 248 242 (= GB-PS 1 409 275) beschrieben sind.

Darüber hinaus sind besonders bevorzugte Polymerisate Pfropfpolymerisate, die durch Pfropfreaktion von

I. 10 bis 40, vorzugsweise 10 bis 35 Gew.-% bezogen auf Pfropfpr15 odukt, mindestens eines (Meth)Acrylsäureesters und/oder eines Gemisches aus

10 bis 40, vorzugsweise 20 bis 35 Gew.-%, bezogen auf Gemisch, Acrylnitril und
60 bis 90, vorzugsweise 65 bis 80 Gew.-%, bezogen auf Gemisch, Styrol auf

II. 60 bis 90, vorzugsweise 65 bis 90 Gew.-%, bezogen auf Pfropfprodukt, eines Butadien-Polymerisats mit mindestens 70 Gew.-%, bezogen auf II, Butadienresten als Pfropfgrundlage erhältlich sind,

wobei vorzugsweise der Gelanteil der Pfropfgrundlage II ≥70 % (in Toluol gemessen), der Pfropfgrad G 0,15 bis 0,55 und der mittlere Teilchendurchmesser $d_{50}$ des Pfropfpolymerisats C 0,2 bis 0,6 μm, vorzugsweise 0,3 bis 0,5 μm betragen (vgl. z.B. EP 0 131 202).

(Meth)Acrylsäureester I sind Ester der Acrylsäure bzw. Methacrylsäure und einwertiger Alkohole mit 1 bis 8 C-Atomen.

Die Pfropfgrundlage II kann neben Butadienresten bis zu 30 Gew.-% bezogen auf II, Reste anderer ethylenisch ungesättigter Monomerer, wie z.B. Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat) enthalten. Die bevorzugte Pfropfgrundlage II besteht aus reinem Polybutadien.

Da bei der Pfropfreaktion die Pfropfmonomeren I bekanntlich nicht vollständig auf die Pfropfgrundlage II aufpfropfen, werden erfindungsgemäß unter Pfropfpolymerisaten auch solche Produkte verstanden, die neben den eigentlichen Pfropfpolymerisaten auch Homo- und Copolymerisate der eingesetzten Pfropfmonomeren I enthalten.

Der Pfropfgrad G bezeichnet das Gew.-Verhältnis von aufgepfropften Pfropfmonomeren zu Pfropfgrundlage und ist dimensionslos.

Die mittlere Teilchengröße $d_{50}$ ist der Durchmesser, oberhalb und unterhalb dessen jeweils 50 Gew.-% der Teilchen liegen. Er kann bestimmt werden mittels Ultrazentrifugen-Messungen (W. Scholtan, H.Lange, Kolloid, Z. und Z. Polymere 250 (1972), 782-796) oder mittels Elektronenmikroskopie und anschließende Teilchenauszählung (C. Kämpf, H.Schuster, Angew. Makromolekulare Chemie 14, (1970), 111-129) oder mittels Lichtstreuungsmessungen.

Besonders bevorzugte kautschukelastische Polymerisate sind z.B: auch Pfropfpolymerisate aus

a) 25 bis 98 Gew.-%, bezogen auf 100 Gew.-% Pfropfpolymerisat, Acrylatkautschuk mit einer Glasübergangstemperatur unter -20°C als Pfropfgrundlage und

b) 2 bis 75 Gew.-%, bezogen auf 100 Gew.-% Pfropfpolymerisat, mindestens eines polymerisierbaren, ethylenisch ungesättigten Monomeren, dessen bzw. deren in Abwesenheit von (a) entstandenen Homo- bzw. Copolymerisate eine Glasübergangstemperatur von 25°C hätten, als Pfropfmonomere.

Die Acrylatkautschuke (a) sind vorzugsweise Polymerisate aus Acrylsäurealkylestern, gegebenenfalls mit bis zu 40 Gew.-% anderer polymerisierbarer, ethylenisch ungesättigter Monomerer. Sofern die als Pfropfgrundlage (a) eingesetzten Acrylatkautschuke - wie nachfolgend beschrieben - ihrerseits bereits Pfropfprodukte mit einem Dienkautschukkern sind, wird zur Berechnung dieser Prozentangabe der Dienkautschukkern nicht mitgezählt. Zu den bevorzugten polymerisierbaren Acrylsäureestern gehören $C_1$-$C_8$-Alkylester, beispielsweise Methyl-, Ethyl-, Butyl, Octyl- und 2-Ethylhexylester; Halogenalkylester, vorzugsweise Halogen-$C_1$-$C_8$-alkylester, wie Chlorethylacrylat und aromatische Ester wie Benzylacrylat und Phenethylacrylat. Sie können einzeln oder in Mischung eingesetzt werden.

Die Acrylatkautschuke (a) können unvernetzt oder vernetzt, vorzugsweise partiell vernetzt sein.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen oder gesättigter Polyole mit 2 bis 4 OH-Gruppen und 2 bis 20 C-Atomen, wie z.B. Ethylenglykoldimethacrylat, Allylmethacrylat, mehrfach ungesättigte heterocyclische Verbindungen, wie z.B. Trivinyl- und Triallylcyanurat und -isocyanurat, Tris-acryloyl-s-triazine, insbesondere Triallylcyanurat; polyfunktionelle Vinylverbindungen wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Trivinylcyanurat, Triacryloylhexahydro-striazin, Triallylbenzole.

Die Menge der vernetzenden Monomeren beträgt vorzugsweise 0,02 bis 5, insbesondere 0,05 bis 2 Gew.-%, bezogen auf Pfropfgrundlage (a).

Bei cyclischen vernetzenden Monomeren mit mindestens 3 ethylenisch ungesättigten Gruppen ist es vorteilhaft, die Menge auf <1 Gew.-% der Pfropfgrundlage (a) zu beschränken.

Bevorzugte "andere" polymerisierbare, ethylenisch ungesättigte Monomere, die neben den Acrylsäureestern gegebenenfalls zur Herstellung der Pfropfgrundlage (a) dienen können, sind z.B. Acrylnitril, Styrol, α-Methylstyrol, Acrylamide, Vinyl-$C_1$-$C_6$-alkylether. Bevorzugte Acrylkautschuke als Pfropfgrundlage (a) sind Emulsionspolymerisate, die einen Gelgehalt von ≥60 Gew.-% aufweisen.

Der Gelgehalt der Pfropfgrundlage (a) wird bei 25°C in Dimethylformamid bestimmt (M.Hoffmann, H.Krämer, R.Kuhn, Polymeranalytik I und II, Georg Thieme-Verlag, Stuttgart 1977).

Acrylatkautschuke als Pfropfgrundlage (a) können auch Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern enthalten.

Der Anteil des Polydien-Kerns in der Pfropfgrundlage (a) kann 0,1 bis 80, bevorzugt 10 bis 50 Gew.-%, bezogen auf (a), betragen. Schale und Kern können unabhängig voneinander unvernetzt, teilvernetzt oder hochvernetzt sein.

Ganz besonders bevorzugt sind die zuvor erwähnten Pfropfpolymerisate aus Polybutadien als Pfropfgrundlage und (Meth)Acrylsäureester und Acrylnitril als Pfropfauflage, wobei die Pfropfgrundlage aus 65 bis 90 Gew.-% Teilen vernetztem Polybutadien mit einem Gelgehalt von über 70 % (in Toluol) und die Pfropfauflage aus einem 5:1 bis 20:1 Gemisch aus Methylmethacrylat und n-Butylacrylat bestehen (z.B. DE 3 105 364, DE 3 019 233).

Die erfindungsgemäßen Formmassen können weiterhin 1 bis 10, vorzugsweise 1 bis 5 Gew.-Teile (bezogen auf 100 Gew.-Teile A+B+C) halogenierte Verbindungen und 0,5 bis 5, vorzugsweise 1 bis 3 Gew.-Teile (bezogen auf 100 Gew.-Teile A+B+C) Antimonverbindungen, insbesondere Antimontrioxid oder Antimonpentoxid enthalten.

Als halogenhaltige, insbesondere bromierte, organische Verbindungen seien beispielhaft genannt:

Ethylen-1,2-bistetrabromphthalimid,

Expoxidiertes Tetrabrombisphenol A-Harz,

Tetrabrombisphenol-A-oligocarbonat,

Pentabrompolyacrylat.

Bevorzugt werden epoxidiertes Tetrabrombisphenol-A und Tetrabrombisphenol-A-Oligocarbonat verwendet.

Expoxidiertes Tetrabrombisphenol-A ist ein bekanntes Diepoxidharz mit einem Molekulargewicht von etwa 350 bis etwa 2.100, vorzugsweise 360 bis 1.000, besonders bevorzugt 370 bis 400, und besteht im wesentlichen aus mindestens einem Kondensationsprodukt von Bisphenol A und Epihalogenhydrin und wird beschrieben durch die Formel (I)

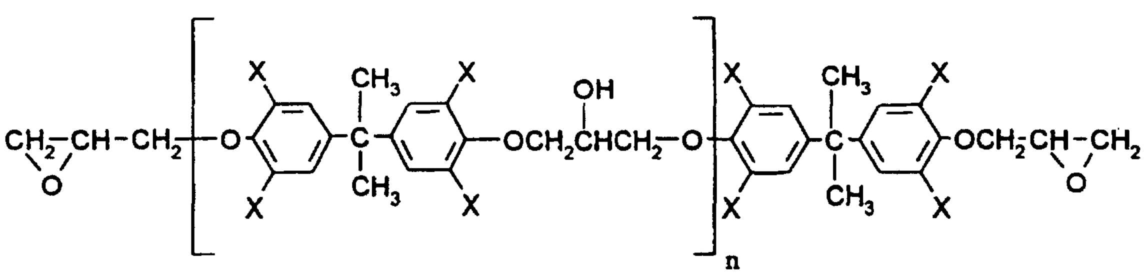

worin X Wasserstoff oder Brom darstellt und n eine Durchschnittszahl zwischen Null und weniger als 2,3 ist (vgl. z.B. EP-A 180 471).

Tetrabrombisphenol-A-oligocarbonat ist beschrieben durch die Formel (II), wobei die Oligomere entweder mit Phenol oder mit Tribromphenol terminiert werden:

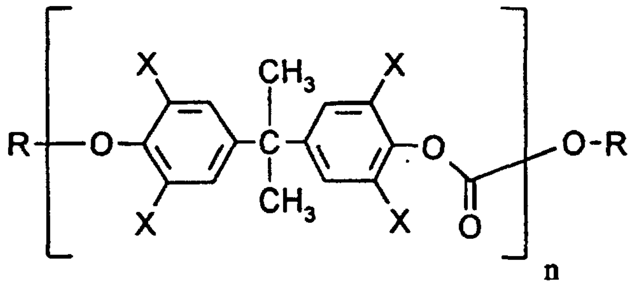

(II)

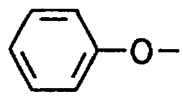

R = oder

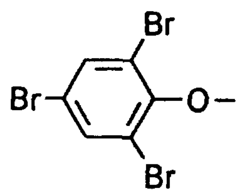

worin X Wasserstoff oder Brom darstellt, n ist eine Durchschnittszahl zwischen 4 und 7.

Tetrabrombisphenol-A-oligocarbonat ist bekannt und nach bekannten Verfahren herstellbar.

Die erfindungsgemäßen Formmassen, die die obengenannte Flammschutzkombination enthalten, zeigen ein sehr gutes Zähigkeitsverhalten.

**Komponente C:**

Als Glasfasern werden handelsübliche Glasfasern, welche auch oberflächenbehandelt sein können, eingesetzt.

Die Formmassen können Nukleierungsmittel wie Mikrotalk enthalten. Weiterhin können die Formmassen übliche Zusatzstoffe wie Gleit- und Entformungsmittel, Verarbeitungsstabilisatoren sowie Farbstoffe und Pigmente enthalten.

Aus den Formmassen hergestellte Formkörper können Bauteile aus dem Elektrosektor sein, für die eine hohe Kriechstromfestigkeit bei einem gleichzeitig guten flammwidrigen Verhalten, ohne Schädigung der thermoplastischen Matrix gewünscht werden. So kommen z.B. Gehäuseteile, Steckerleisten und Leuchtensockel sowie Teile aus dem Kraftfahrzeugsektor zum Einsatz.

Die Herstellung der erfindungsgemäßen Formmassen kann in den üblichen Mischaggregaten wie Walzen, Knetem, Ein- oder Mehrwellenextrudern durch Vermischen der Einzelkomponenten erhalten werden.

**Beispiel 1** (erfindungsgemäß)

| | |
|---|---|
| 44,4 Gew.-% | Polybutylenterephthalat (PBT), Grenzviskosität IV=1,185+/-0,015 |

(fortgesetzt)

| | |
|---|---|
| 45,0 Gew.-% | Calcium-Magnesium-Carbonat-Hydrat (Securoc®, Incemin AG) |
| 10,0 Gew.-% | Glasfasern |
| 0,6 Gew.-% | Additive (wie Verarbeitungshilfsmittel, Nukleierungsmittel). |

**Beispiel 2** (erfindungsgemäß)

| | |
|---|---|
| 44,7 Gew.-% | Polybutylenterephthalat (PBT), Grenzviskosität IV=1,185+/-0,015 |
| 55,0 Gew.-% | Calcium-Magnesium-Carbonat-Hydrat (Securoc®, Incemin AG) |
| 0,3 Gew.-% | Additive |

**Beispiel 3** (Vergleich)

| | |
|---|---|
| 64,9 Gew.-% | Polybutylenterephthalat (PBT), Grenzviskosität IV=1,185+/-0,015 |
| 13,0 Gew.-% | Tetrabrombisphenol-A-oligocarbonat (Great Lakes) |
| 12,0 Gew.-% | Glasfasern |
| 4,5 Gew.-% | Antimontrioxid |
| 0,6 Gew.-% | Additive |

**Beispiel 4** (Vergleich)

| | |
|---|---|
| 54,9 Gew.-% | Polybutylenterephthalat (PBT), Grenzviskosität IV=1,185+/-0,015 |
| 10,0 Gew.-% | Tetrabrombisphenol-A-oligocarbonat (Great Lakes) |
| 30,0 Gew.-% | Glasfasern |
| 4,5 Gew.-% | Antimontrioxid |
| 0,6 Gew.-% | Additive |

**Beispiel 5** (erfindungsgemäß)

| | |
|---|---|
| 47,1 Gew.-% | Polybutylentrephthalat, Grenzviskosität IV = 1,185 |
| 40,0 Gew.-% | Calcium-Magnesium-Carbonat-Hydrat(Securoc® PBT/PP Incemin AG) |
| 3,0 Gew.-% | Tetrabrombisphenol-A-oligocarbonat (Great Lakes) |
| 8,0 Gew.-% | Glasfasern |
| 1,5 Gew.-% | Antimontrioxid |
| 0,4 Gew.-% | Additive |

**Beispiel 6** (erfindungsgemäß)

| | |
|---|---|
| 52,1 Gew.-% | Polybutylentrephthalat, (Grenzviskosität IV= 1,185 |
| 35,0 Gew.-% | Calcium-Magnesium-Carbonat-Hydrat(Securoc® PBT/PP Incemin AG) |
| 3,0 Gew.-% | Tetrabrombisphenol-A-obligocarbonat (Great Lakes) |
| 8 Gew.-% | Glasfasern |
| 1,5 Gew.-% | Antimontrioxid |

(fortgesetzt)

| | |
|---|---|
| 0,4 Gew.-% | Additive |

Die Komponenten werden in einem Extruder compoundiert und in einer Spritzgußmaschine bei üblichen Verarbeitungsbedingungen für Polyalkylenterephthalate (Massetemperatur ca. 260°C) zu Formteilen verarbeitet. Entsprechend werden auch die in den Beispielen angegebenen Komponenten im Extruder compoundiert und bei einer Massetemperatur von ca. 260°C zu Prüfkörpern verarbeitet.

**Beschreibung der Testmethoden:**

Niederspannungskriechwegbildung (Kriechstromfestigkeit) (CTI), Prüflösung A gemäß DIN-Norm VDE 0303 Teil I, IEC 112
Flammtest gemäß UL 94/IEC 707 FV
Wärmeformbeständigkeit (Vicat B) gemäß DIN 53 460
Biegeversuch gemäß DIN 53 452
Relative Viskosität ($\eta_{rel}$) gemäß DIN 51 562 /Teil 2 bei 25 C
Schlagzähigkeit nach IZOD 180.

Die hier eingesetzten Additive sind Nukleierungsmittel, Verarbeitungsstabilisatoren und Entformungshilfsmittel. Die Vergleichsbeispiele 3 und 4 enthalten zusätzlich noch Antidrippingmittel.

Die Ergebnisse sind in der folgenden Tabelle zusammengefaßt.

**Tabelle**

| | erfindungsgemäß | | Vergleich | | erfindungsgemäß | |
|---|---|---|---|---|---|---|
| | Beispiel 1 | Beispiel 2 | Beispiel 3 | Beispiel 4 | Beispiel 5 | Beispiel 6 |
| CTI Prüflösung A | 600 | 600 | 200 | 175 | 550 | 475 |
| Flammtest (UL) | | | | | | |
| 0,8 mm | V2 | V0 | V2 | V2 | V2 | V2 |
| 1,6mm | V1 | V0 | V0 | V0 | V1 | V1 |
| Wärmeformbest. Vicat B [ C] | 210 | 191 | 205 | 210 | 210 | 210 |
| Schlagzähigkeit Izod-an [kJ/m$^2$] | 19 | 10 | 20 | 41 | 22 | 28 |
| Biegeversuch E-Modul[N/mm$^2$] | 10500 | 14750 | 5300 | 10100 | 8550 | 7800 |
| Rheologie eta rel. | 1,44 | - | 1,45 | 1,45 | - | - |

**Patentansprüche**

1. Thermoplastische Formmassen bestehend aus

A) 20 bis 60 Gew.-Teilen Calcium-Magnesium-Carbonat-Hydrat,
B) 30 bis 80 Gew.-Teilen Polyalkylenterephthalat und
C) 0 bis 30 Gew.-Teilen Glasfasern,

wobei die Summe aus A+B+C 100 ergibt und wobei gegebenenfalls jeweils 1 bis 20 Gew.-Teile Polyalkylenterephthalat durch aromatisches Polycarbonat und/oder kautschukelastisches Polymerisat mit einer Glasübergangstemperatur von <-10°C ersetzt werden kann und wobei die Formmasse 1 bis 10 Gew.-Teile halogenierte Verbindungen und 0,5 bis 5 Gew.-Teile (jeweils bezogen auf 100 Gew.-Teile A+B+C) Antimontrioxid oder Antimonpentoxid und zusätzlich Nukleierungsmittel und/oder Zusatzstoffe wie Gleit- und Entformungsmittel, Verarbeitungsstabilisatoren sowie Farbstoffe und Pigmente enthalten kann.

2. Formmassen gemäß Anspruch 1, wobei die Niederspannungskriechwegbildung >400 [Stufe] beträgt.

3. Formmassen gemäß Anspruch 1, wobei die Niederspannungskriechwegbildung >500 [Stufe] beträgt.

4. Formmassen gemäß Anspruch 1, wobei Ethylen -1,2-bistetrabromphthalinid, epoxidierte Tetrabrombisphenol-A Harze, Tetrabrombisphenol-A-obligocarbonat und/oder Pentabrompolyacrylat als halogenierte Verbindungen eingesetzt werden.

5. Verwendung von

A) 20 bis 60 Gew.-Teilen Calcium-Magnesium-Carbonat-Hydrat in
B) 30 bis 80 Gew.-Teilen Polyalkylenterephthalat und
C) 0 bis 30 Gew.-Teilen Glasfasern,

wobei die Summe aus A+B+C 100 ergibt und wobei gegebenenfalls jeweils 1 bis 20 Gew.-Teile, Polyalkylenterephthalat durch aromatisches Polycarbonat und/oder kautschukelastisches Polymerisat mit einer Glasübergangstemperatur von <-10°C ersetzt werden kann und wobei die Formmasse 1 bis 10 Gew.-Teile halogenierte Verbindungen und 0,5 bis 5 Gew.-Teile (jeweils bezogen auf 100 Gew.-Teile A+B+C) Antimontrioxid oder Antimonpentoxid enthalten kann, zur Herstellung von Formkörpern, die nach DIN-Norm VDE 0303 Teil I, IEC 112 (Prüflösung A) eine Niederspannungskriechwegbildung >400 [Stufe] haben.

**Claims**

1. Thermoplastic moulding compositions consisting of

A) 20 to 60 parts by weight of calcium magnesium carbonate hydrate
B) 30 to 80 parts by weight of polyalkylene terephthalate and
C) 0 to 30 parts by weight of glass fibres,

wherein the sum of A+B+C is 100 and wherein 1 to 20 parts by weight of polyalkylene terephthalate may in each case optionally be replaced with aromatic polycarbonate and/or rubber-elastic polymer with a glass transition temperature of <-10°C and wherein the moulding composition may contain 1 to 10 parts by weight of halogenated compounds and 0.5 to 5 parts by weight (in each case relative to 100 parts by weight of A+B+C) of antimony trioxide or antimony pentoxide and additionally nucleating agents and/or additives, such as lubricants and mould release agents, processing stabilisers together with dyes and pigments.

2. Moulding compositions according to claim 1, wherein the low voltage tracking is >400 [level].

3. Moulding compositions according to claim 1, wherein the low voltage tracking is >500 [level].

4. Moulding compositions according to claim 1, wherein the halogenated compounds used are ethylene 1,2-bistetrabromophthalimide, epoxidised tetrabromobisphenol A resins, tetrabromobisphenol A oligocarbonate and/or pentabromo polyacrylate.

5. Use of

A) 20 to 60 parts by weight of calcium magnesium carbonate hydrate in
B) 30 to 80 parts by weight of polyalkylene terephthalate and
C) 0 to 30 parts by weight of glass fibres,

wherein the sum of A+B+C is 100 and wherein 1 to 20 parts by weight of polyalkylene terephthalate may in each case optionally be replaced with aromatic polycarbonate and/or rubber-elastic polymer with a glass transition temperature of <-10°C and wherein the moulding composition may contain 1 to 10 parts by weight of halogenated compounds and 0.5 to 5 parts by weight (in each case relative to 100 parts by weight of A+B+C) of antimony trioxide or antimony pentoxide, for the production of mouldings which have low voltage tracking according to DIN standard VDE 0303, part I, IEC 112 (test solution A) of >400 [level].

**Revendications**

1. Masses de moulage thermoplastiques, consistant en :

   A) 20 à 60 parties en poids de carbonate de calcium et de magnésium hydraté ;
   B) 30 à 80 parties en poids de poly(téréphtalate d'alcoylène), et
   C) 0 à 30 parties en poids de fibres de verre,

   où la somme de A+B+C donne 100 et où le cas échéant, on peut remplacer 1 à 20 parties en poids du poly (téréphtalate d'alcoylène) par un polycarbonate aromatique et/ou un polymère caoutchouteux avec une température de transition vitreuse < -10°C, et où les masses de moulage peuvent contenir 1 à 10 parties en poids de composés halogénés et 0,5 à 5 parties en poids (chaque fois, sur base de 100 parties en poids de A+B+C) de trioxyde d'antimoine ou de pentoxyde d'antimoine et en outre, un agent de nucléation et/ou des additifs comme des agents de lubrification interne et de démoulage, des stabilisants au traitement ainsi que des colorants et pigments.

2. Masses de moulage suivant la revendication 1, où la naissance de fuite superficielle à basse tension est > 400 [degré].

3. Masses de moulage suivant la revendication 1, où la naissance de fuite superficielle à basse tension est > 500 [degré].

4. Masses de moulage suivant la revendication 1, où l'on met en oeuvre comme composé halogéné, l'éthylène-1,2-bistétrabromophtalimide, une résine de tétrabromobisphénol A époxydé, un oligocarbonate de tétrabromobisphénol A et/ou le pentabromopolyacrylate.

5. Utilisation de :

   A) 20 à 60 parties en poids de carbonate de calcium et de magnésium hydraté, dans
   B) 30 à 80 parties en poids de poly(téréphtalate d'alcoylène), et
   C) 0 à 30 parties en poids de fibres de verre,

   où la somme de A+B+C donne 100 et où le cas échéant, on peut remplacer 1 à 20 parties en poids du poly (téréphtalate d'alcoylène) par un polycarbonate aromatique et/ou un polymère caoutchouteux avec une température de transition vitreuse < -10°C, et où les masses de moulage peuvent contenir 1 à 10 parties en poids de composés halogénés et 0,5 à 5 parties en poids (chaque fois, sur base de 100 parties en poids de A+B+C) de trioxyde d'antimoine ou de pentoxyde d'antimoine, pour la préparation d'articles moulés, qui ont une naissance de fuite superficielle à basse tension de > 400 [degré], selon DIN-norme VDE 0303 partie I, IEC 112 (solution d'essai A).